# FASCICULE DE BREVET EUROPEEN

(11) **EP 0 515 266 B1**
(45) Date de publication et mention de la délivrance du brevet: **06.09.1995**
(21) Numéro de dépôt: 92401366.7
(22) Date de dépôt: 20.05.1992
(51) Int. Cl.: G01V 3/08

(54) **Détecteur de proximité de lignes électriques aériennes**
Näherungsdetektor für elektrische Freileitungen
Proximity detector for aerial power lines

(30) Priorité: 23.05.1991 FR 9106208
(43) Date de publication de la demande: 25.11.1992
(73) Titulaire: APPLICATION SECURITE POSITIVE ASEPT S.A., F-85660 Saint Philbert de Bouaine (FR)
(72) Inventeur: Vissac, Claude, F-92330 Sceaux (FR); Gayant, Jacky, F-85600 Montaigu (FR); Thomas, Jean, F-85110 Chantonnay (FR)
(74) Mandataire: Dawidowicz, Armand

(56) Documents cités:
- EP-A- 0 275 756
- EP-A- 0 341 576
- WO-A-91/00525
- US-A- 4 532 501
- IBM TECH. DISCL. BULLETIN vol. 24, no. 9, Février 1982, pages 4462-4462; K.E. POWELL : "Screening sensor circuit arrangement"

## Description

L'invention concerne un détecteur de proximité de lignes électriques aériennes du type comprenant un étage détecteur constitué par une antenne isolée agencée pour détecter les champs électriques en émettant des signaux électriques de tension et par des moyens d'amplification desdits signaux alimentant un circuit capacitif, ainsi qu'un étage récepteur agencé pour analyser la tension de détection dudit circuit capacitif et commander un dispositif d'alarme et/ou d'asservissement dans le cas d'une variation prédéterminée de ladite tension de détection.

De tels détecteurs capacitifs ont fait l'objet de nombreuses études et fabrications, en particulier pour la protection d'engins mobiles comportant une partie déployable, comme c'est le cas par exemple d'engins de chantier.

Les signaux émis par l'antenne sont fonction de la distance entre l'antenne et la ligne à détecter ainsi que de la tension parcourant cette ligne et permettent donc de détecter l'entrée de l'antenne dans le champ électrique entourant le conducteur. Il s'agit donc d'une détection volumétrique puisque la portée de l'antenne est omnidirectionnelle.

Le circuit capacitif est parcouru par un courant porteur provenant d'une source dont la masse constitue la masse du détecteur.

Les dispositifs connus, comme décrit, par exemple, dans IBM Technical Disclosure Bulletin, vol. 24, no. 9, février 1982, page 4462, et dans EP-A-0 275 756, doivent bien entendu être suffisamment fiables pour interdire tout risque d'absence de signal d'alarme et/ou de commande d'asservissement dans le cas de la présence d'un conducteur électrique à une tension donnée et une distance minimale prédéterminée. A cet effet, il est indispensable de s'assurer en permanence du bon fonctionnement des deux étages constituant le détecteur.

La présente invention vise en conséquence à fournir les sécurités, en particulier la sécurité dite positive, nécessaire à la garantie de fiabilité du détecteur.

A cet effet, le détecteur selon l'invention est caractérisé en ce que lesdits moyens d'amplification comprennent un amplificateur à gain ajustable dont la sortie est reliée à un filtre alimentant un circuit de mise en forme, la tension résultante aux bornes d'une capacité du circuit capacitif étant envoyée à un comparateur à fenêtre.

Le détecteur de l'invention permet donc d'actionner le circuit récepteur dans le cas où la tension aux bornes de la capacité est en dehors de la fenêtre déterminée par le comparateur, cette tension correspondant à une valeur moyenne des signaux d'antenne. L'utilisation d'un filtre permet en outre une protection contre les rayonnements électromagnétiques perturbateurs.

De préférence, et selon une autre caractéristique importante de l'invention, l'étage détecteur comprend un générateur d'impulsions alimentant l'antenne. Ce générateur d'impulsions permet, après réglage de la fréquence, de positionner la tension aux bornes du condensateur, en l'absence de détection, afin d'établir un équilibre du système au centre de la fenêtre du comparateur. En outre, le passage des impulsions dans l'antenne permet d'assurer un auto-contrôle du détecteur, l'absence de ces impulsions, correspondant par exemple à une rupture de l'antenne, provoquant l'émission d'une alarme et/ou une commande d'asservissement.

Avantageusement, le détecteur selon l'invention est alimenté par une source à tension stabilisée, de préférence par un circuit de filtrage des parasites d'un accumulateur, ledit circuit étant relié aux bornes d'une batterie tampon. On obtient ainsi une sécurité de fonctionnement, même en cas de décharge de l'accumulateur.

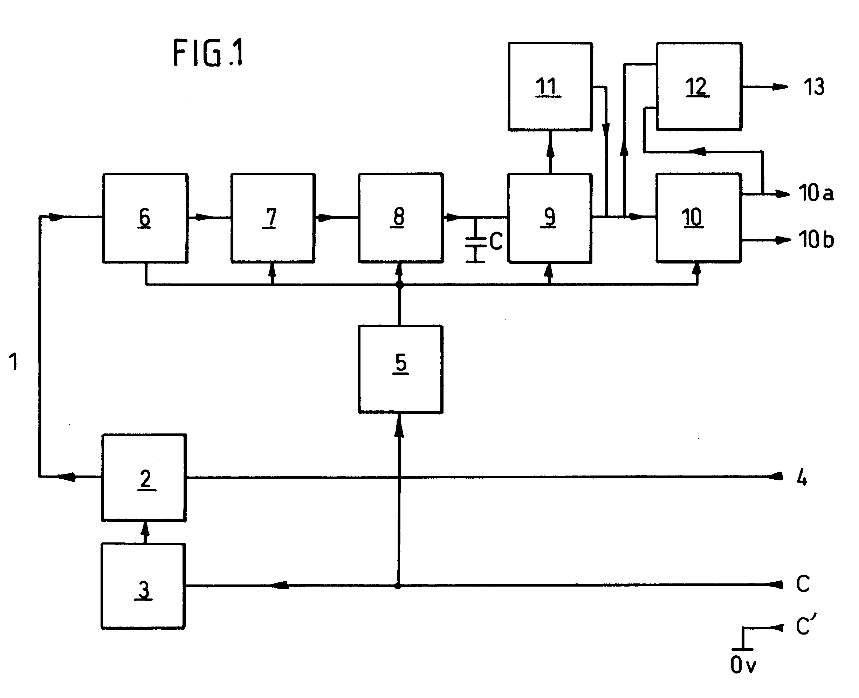

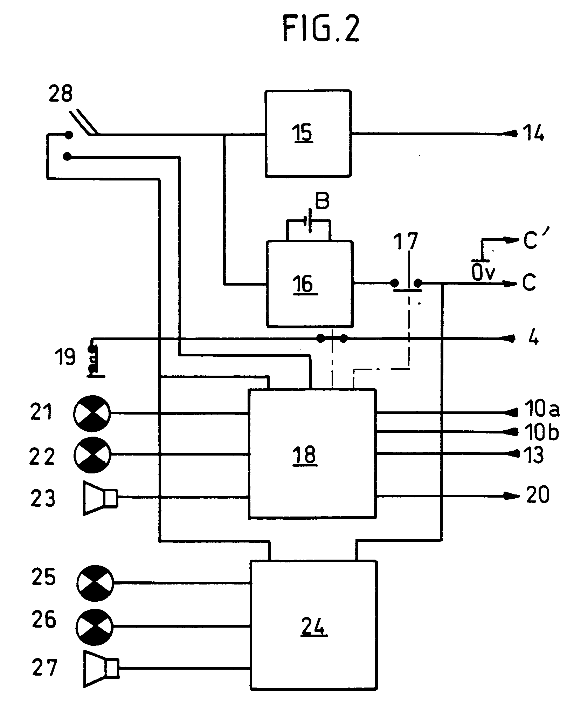

L'invention sera bien comprise à la lecture de la description suivante faite en se référant au dessin annexé dans lequel : La figure 1 est un schéma synoptique d'un étage détecteur selon un exemple de réalisation de l'invention; et la figure 2 est un schéma synoptique d'un étage récepteur.

L'étage détecteur représenté à la figure 1 comprend une antenne 1 formant capteur et dont l'extrémité amont est connectée à un générateur d'impulsions 2 alimenté par un circuit d'alimentation 3 relié aux bornes c, c′ d'une source de l'étage récepteur qui sera décrite en détail en référence à la figure 2. Le générateur d'impulsions 2 est également relié à un circuit d'autotest 4.

La source c, c′ est également raccordée à un circuit d'alimentation 5 d'une chaîne de détection et de traitement comprenant un étage de détection à amplification variable 6 relié par son entrée à la sortie de l'antenne 1. La sortie du détecteur 6 est appliquée à un filtre passe-bas 7 dont la coupure est à 100 kHz. La sortie du filtre 7 est connectée à l'entrée d'un circuit de mise en forme 8 ou trigger-inverseur, dont la sortie est appliquée à un comparateur à fenêtre 9. Une capacité C est montée en dérivation entre le circuit de mise en forme 8 et le comparateur à fenêtre 9. Une sortie du comparateur à fenêtre 9 est envoyée à un étage indicateur de détection 10 dont les deux sorties 10a, 10b forment l'entrée de l'étage récepteur. Une sortie du comparateur à fenêtre 9 est également envoyée à un circuit de sécurité 11 du comparateur. De même, la sortie 10a de l'étage indicateur de détection 10 est envoyée à un circuit de sécurité 12 de l'étage indicateur, directement alimenté par la sortie du comparateur 9, et qui émet un signal de détection de défaut de relais sur sa sortie 13 en cas de défaut de fonctionnement de l'étage indicateur 10.

L'étage récepteur, représenté à la figure 2, comprend un raccordement d'alimentation 14 à un accumulateur (non représenté), par exemple la batterie d'un véhicule sur lequel est monté un dispositif à protéger. L'alimentation 14 est reliée à l'entrée d'un filtre 15 des parasites d'alimentation. La sortie du filtre 15 est appliquée à un circuit d'alimentation 16 de l'étage détecteur. Une batterie tampon B est raccordée au circuit d'alimentation 16 afin de pallier les déficiences éventuelles de la batterie. La sortie du circuit d'alimentation 16 forme l'alimentation c, c′ de l'étage détecteur, par l'intermédiaire d'un relais 17.

L'étage récepteur comprend en outre un circuit de contrôle et de traitement 18 des informations de l'étage détecteur et reçoit les sorties de détection 10a, 10b de l'étage indicateur de détection 10 ainsi que la sortie 13 du circuit de sécurité. Il reçoit également la sortie du circuit d'autotest 4 et une commande de test manuel 19. Le circuit 18 est en outre relié au relais 17 pour détecter les défauts du circuit d'alimentation 16. Le circuit de contrôle et de traitement 18 comprend une sortie 20 de commande d'asservissements tels que des moteurs ou des vérins du système à protéger, ainsi que des commandes d'une alarme visuelle de marche 21, d'une alarme visuelle de danger 22 et d'une alarme sonore de danger 23.

L'étage récepteur comporte en outre un circuit de contrôle 24 de l'alimentation du détecteur dont l'entrée est dérivée de la sortie du relais 17. Le circuit de contrôle 24 commande un voyant de batterie chargée 25, un voyant de batterie déchargée 26 et une alarme sonore de batterie déchargée 27.

Le circuit de contrôle et de traitement 18 et le circuit de contrôle 24 sont alimentés directement à la sortie du filtre 15 par l'intermédiaire d'un interrupteur arrêt-marche-marche forcée 28.

Le fonctionnement du détecteur est le suivant.

Le condensateur C extrait la valeur moyenne des signaux émis par l'antenne 1 et cette valeur moyenne est comparée à la fenêtre du comparateur 9.

En cas de détection, la valeur moyenne dépasse la valeur maximale de la fenêtre et le circuit 10 émet des signaux sur ses sorties 10a, 10b qui commandent l'étage de contrôle et de traitement 18 pour actionner les commandes d'alarme 21, 22 et 23 et/ou la commande d'asservissement 20. L'oscillateur 2 permet, après réglage de la fréquence (par exemple entre 2 et 20 Hz), de positionner la valeur de la tension aux bornes du condensateur C, en l'absence de détection, au centre de la fenêtre du comparateur 9. On peut ainsi calibrer le système en fonction de l'environnement de départ. Le filtre 7 protège par ailleurs le système des rayonnements électro-magnétiques perturbateurs.

En cas de défaut de l'étage détecteur, par exemple par rupture de l'antenne 1 ou de défaillance de composants de la chaîne de détection 6, 7, 8, 9, 10, la valeur moyenne extraite par le condensateur C tombe en-dessous de la valeur minimale de la fenêtre du comparateur 9, ce qui commande également l'étage 18.

Il pourrait être envisagé, pour certaines applications, de différencier la sortie de la valeur moyenne en dehors de la fenêtre du détecteur 9, au-dessus ou en-dessous, pour indiquer de manière différente une détection et un défaut.

Le dispositif selon l'invention est donc auto-contrôlé en permanence au moyen d'une boucle comprenant l'antenne 1 et la chaîne détectrice 6-10, ce qui assure la sécurité positive requise.

Cette sécurité est complétée par l'utilisation d'une batterie tampon B et par le circuit de contrôle 24 de l'alimentation.

## Revendications

1. Détecteur de proximité de lignes électriques aériennes du type comprenant un étage détecteur constitué par une antenne isolée agencée pour détecter les champs électriques en émettant des signaux électriques de tension et par des moyens d'amplification desdits signaux alimentant un circuit capacitif, ainsi qu'un étage récepteur agencé pour analyser la tension de détection dudit circuit capacitif et commander un dispositif d'alarme et/ou d'asservissement dans le cas d'une variation prédéterminée de ladite tension de détection,
caractérisé en ce que lesdits moyens d'amplification comprennent un amplificateur à gain ajustable (6) dont la sortie est reliée à un filtre (7) alimentant un circuit de mise en forme (8), la tension résultante aux bornes d'une capacité (C) du circuit capacitif étant envoyée à un comparateur à fenêtre (9).

2. Détecteur selon la revendication 1,
caractérisé en ce que l'étage détecteur comprend un générateur d'impulsions (2) alimentant l'antenne (1).

3. Détecteur selon l'une des revendications 1 et 2,
caractérisé en ce qu'il est alimenté par une source à tension stabilisée (16, B), de préférence par un circuit de filtrage (15) des parasites d'un accumulateur, ledit circuit étant relié aux bornes d'une batterie tampon (B).

4. Détecteur selon l'une des revendications 1 à 3,
caractérisé en ce qu'il comprend des moyens (24) de contrôle de l'alimentation de l'étage détecteur.

5. Détecteur selon l'une des revendications 1 à 4,
caractérisé en ce qu'il comprend des moyens de différenciation de la sortie du signal capacitif par rapport à la fenêtre du comparateur à fenêtre (9) selon le sens de la sortie.

6. Détecteur selon l'une des revendications 1 à 5,
caractérisé en ce que la sortie du comparateur à fenêtre (9) est envoyée à un étage indicateur de détection (10) commandant un circuit de contrôle et de traitement (18).

7. Détecteur selon la revendication 6,
caractérisé en ce qu'il comprend un circuit (12) de sécurité de l'étage indicateur (6,7,8,9,10).

8. Détecteur selon l'une des revendications 1 à 7,
caractérisé en ce qu'il comprend un circuit (11) de sécurité du comparateur (9).

## Patentansprüche

1. Näherungsdetektor für elektrische Freileitungen in der Ausführung mit einer Detektorstufe, bestehend aus einer isolierten Antenne, die zur Erfassung der elektrischen Felder durch das Aussenden von elektrischen Spannungssignalen eingerichtet ist, und aus Mitteln zur Verstärkung der genannten Signale, die eine kapazitive Schaltung speisen, sowie mit einer Empfängerstufe, die zur Analyse der Erfassungsspannung der genannten kapazitiven Schaltung und zur Ansteuerung einer Alarm- und/oder Regelvorrichtung im Falle einer vorbestimmten Änderung der genannten Erfassungsspannung eingerichtet ist, **dadurch gekennzeichnet**, daß die genannten Verstärkungsmittel einen Verstärker mit einstellbarem Verstärkungsfaktor (6) umfassen, dessen Ausgang mit einem Filter (7) verbunden ist, an das ein Impulsformer (8) angeschlossen ist, wobei die an den Anschlüssen einer Kapazität (C) der kapazitiven Schaltung resultierende Spannung an eine Fenstervergleichseinrichtung (9) übertragen wird.

2. Näherungsdetektor nach Anspruch 1, **dadurch gekennzeichnet**, daß die Detektorstufe einen Impulsgenerator (2) umfaßt, der an die Antenne (1) angeschlossen ist.

3. Näherungsdetektor nach Anspruch 1 und 2, **dadurch gekennzeichnet**, daß er durch eine stabilisierte Spannungsquelle (16, B) gespeist wird, vorzugsweise durch eine Filterschaltung (15) zum Ausfiltern der Störungen eines Akkumulators, wobei die genannte Schaltung an die Anschlüsse einer Pufferbatterie (B) angeschlossen ist.

4. Näherungsdetektor nach einem der Ansprüche 1 bis 3, **dadurch gekennzeichnet**, daß er Mittel (24) zur Kontrolle der Speisung der Detektorstufe umfaßt.

5. Näherungsdetektor nach einem der Ansprüche 1 bis 4, **dadurch gekennzeichnet**, daß er Mittel zur Differenzierung des Ausgangs des kapazitiven Signals im Verhältnis zum Fenster der Fenstervergleichseinrichtung (9) je nach Richtung des Ausgangs umfaßt.

6. Näherungsdetektor nach einem der Ansprüche 1 bis 5, **dadurch gekennzeichnet**, daß der Ausgang der Fenstervergleichseinrichtung (9) an eine Erfassungsanzeigestufe (10) geleitet wird, die eine Kontroll- und Verarbeitungsschaltung (18) steuert.

7. Näherungsdetektor nach Anspruch 1 , **dadurch gekennzeichnet**, daß er eine Sicherheitsschaltung (12) für die Anzeigestufe (6, 7, 8, 9, 10) umfaßt.

8. Näherungsdetektor nach einem der Ansprüche 1 bis 7, **dadurch gekennzeichnet**, daß er eine Sicherheitschaltung (11) für die Vergleichseinrichtung (9) umfaßt.

## Claims

1. Proximity detector for aerial power lines, of the type comprising a detector stage comprised of an insulated aerial arranged to detect electrical fields by emitting electrical voltage signals and of means to amplify the said signals supplying a capacitive circuit, as well as a receiving stage arranged to analyse the detection voltage of the said capacitive circuit and to control an alarm and/or automatic control device in the case of a predetermined variation in the said detection voltage, characterised in that the said amplification means comprise an adjustable gain amplifier (6) of which the output is connected to a filter (7) supplying a shaping circuit (8), the resulting voltage at the terminals of a capacity (C) of the capacitive circuit being sent to a window comparator (9).

2. Detector according to claim 1, characterised in that the detector stage comprises a pulse generator (2) supplying the aerial (1).

3. Detector according to either of claims 1 and 2, characterised in that it is supplied by a stabilised voltage source (16, B), preferably by a circuit (15) for filtering the interference of an accumulator, the said circuit being connected to the terminals of a buffer battery (B).

4. Detector according to any of claims 1 to 3, characterised in that it comprises means (24) for controlling the supply of the detector stage.

5. Detector according to any of claims 1 to 4, characterised in that it comprises means for differentiation of the output of the capacitive signal with respect to the window of the window comparator (9) according to the output direction.

6. Detector according to any of claims 1 to 5, characterised in that the output of the window comparator (9) is sent to a detection indicator stage (10) controlling a control and processing circuit (18).

7. Detector according to claim 6, characterised in that it comprises a security circuit (12) for the indicator stage (6, 7, 8, 9, 10).

8. Detector according to any of claims 1 to 7, characterised in that it comprises a security circuit (11) for the comparator (9).
